# EUROPEAN PATENT APPLICATION

(11) **EP 0 781 046 A2**
(43) Date of publication of application: **25.06.1997**
(21) Application number: 96402842.7
(22) Date of filing: 20.12.1996
(51) Int. Cl.: H04N 7/01

(54) **Method and relative circuit arrangement to transform an image into a second image having a different space/time dimension**

(30) Priority: 20.12.1995 IT MI952682
(71) Applicant: ALCATEL ALSTHOM COMPAGNIE GENERALE D'ELECTRICITE, 75008 Paris (FR)
(72) Inventor: Zugno, Claudio, 22073 Fino Mornasco (IT); Cucchi, Silvio, 20090 Gaggiano (IT)
(74) Representative: Pohl, Herbert, Dipl.-Ing.

(57) **Abstract**

The present invention relates to a system for use when there is the need of a contemporaneous manipulation of digitized images having different resolution. In particular for trasforming images from a first TV standard into a second TV standard. The invention allows a more generic and flexible approach to the problem of generating a program, for a certain digital TV standard, by deriving it from another digital TV standard, while observing the artistic constraints proper of the obtained format and avoiding the cost multiplication that would follow from the use of several systems for live telecasting or registration or reproduction or generic manipulation of television images or trasmission thereof. This can be obtained if, in order to produce television images with a certain resolution, other images having higher resolution are used, on which space-time varying cutting operations, followed by eventual additional processing (digital filterings), are executed.

## Description

The present invention relates to a method as set forth in the preamble of claim 1 and to a circuit arrangement as set forth in the preamble of claim 9.

In the more generic area of any digital image, consider the specific and altogether more complex case of time sequences of correlated content images, i.e. of television signals or the like. The number of existing digital TV standards is destined to increase with the introduction of systems having images featuring progressively a higher and higher resolution.

The resolution of a television signal is determined by its space/time dimensions. The space dimensions here refer to the number of pixels per line and the number of lines per frame. The time dimensions here refer to the number of frames per second. At present digital television signals having conventional resolutions can be obtained by space undersampling of the entire format, i.e. of the overall number of pixels/line and lines/frame of those having highest resolution.

Despite the improvement in undersampling techniques, the resulting conventional resolution signal is not optimal because, in undersampling, artistic constraints dependent on the characteristic features of each standard are not taken into account. A live telecast for a high resolution signal will tend to emphasize the aforesaid resolution or to exploit its properties for framings which anyway are not suitable for lower resolution signals. An object of the present invention is to provide a system, to be used when the contemporary manipulation of digital television images having different resolution or generically belonging to different standards is required.

In accordance with the invention, this object is achieved through a method having the characteristics set forth in claim 1 and a circuit arrangement as set forth in claim 9.

Further characteristics of the invention are set forth in the dependent claims.

The invention allows an approach, which, on the whole, is more generic and flexible, to the problem of generating a program for a certain digital TV standard, by deriving it from another digital TV standard, while observing the artistic constraints peculiar to the format obtained and avoiding the multiplication of costs which would result from the use of several systems for telecast or registration or reproduction or generic manipulation of television images or transmission thereof.

What has just been premised can be obtained if, in order to produce television images with a certain resolution, other images having highest resolution are used, on which space-time varying cut-out operations followed by eventual additional processing (digital filtering) are carried out.

Therefore, advantages will result in those systems in which it is necessary to handle simultaneously television images having different resolution and then in the production and post-production of television signals, in the storage and reproduction of television signals, in the generic manipulation of television signals and in the transmission of television signals. This is due to the fact that what is proposed here allows the use of a sole high-resolution source so as to avoid the duplication or generic multiplication of the apparatus, and therefore of costs, in each of the above applications, for instance cameras, recorders, synthetic signal generators, editing machines, format or standard converters, television signal codecs for transmission. Moreover, it provides e tool flexible enough to allow determined degrees of freedom in the composition of the images obtained from those having higher resolution.

Such a system can be used also in transmission systems using coders for the compression of television images, when it is necessary that the same program is coded and transmitted at the same time with formats relative to different standards.

As compared with the known systems, the invention allows the use of the digital television signal obtained by cut-out, filtering and coding (base level), as a support for the coding of the digital television signal from which it is cut out (upper level), thus allowing a reduction of the overall amount of information to be transmitted.

In this type of systems, what has been set forth can be implemented by means of the current technology using the standard coding algorithms and the standard transmission rules.

The invention will now be described in greater detail by reference to the attached drawings in which:
- Fig. 1 is a block cable-and-truck schematic of a circuit arrangement, according to the invention, to transform an image having a first space/time dimension into an image having a second space/time dimension;
- Fig. 2 and Fig. 3 represent an example of transformation of an image into another having a lower resolution which is obtained by cutting out, from the source image, a portion of dimension equal to the format specifying it;
- Fig. 4 and Fig. 5 represent an example of transformation of an image into another having lower resolution which is obtained by cutting out one or more portions of any dimension from the source signal and applying space-time filterings (interpolations or decimations);
- Fig. 6 represents, along with the relative space/time dimensions, the source signal, the cut-out signal and the signal produced with the cut-out coordinates relative to the source signal;
- Fig. 7 represents the detailed block diagram of the circuit arrangement, according to the invention.

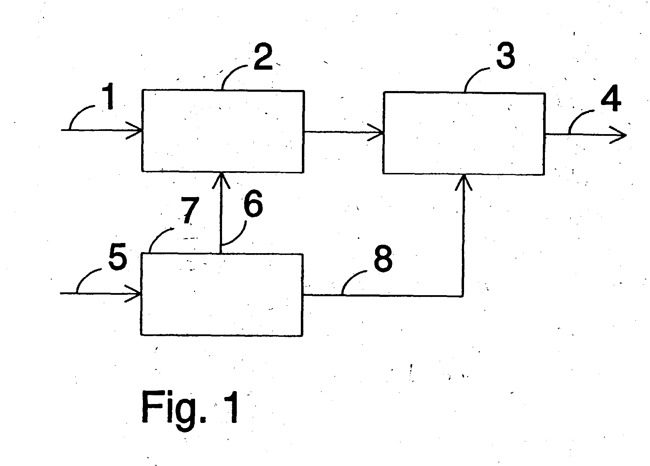

In Fig. 1 the cable-and-trunk schematic of the circuit arrangement according to the invention is represented in block form. The source image or first image is applied through the line 1 to block 2 to transform or cut out the first image. The output of block 2 is fed to block 3 for an eventual space/time filtering, which provides terminal 4 with the product or second image. The control signals of the entire transform operation, fed through line 5 to the direction control block 7, produce the signals fed to line 6 that operates block 2 and the signals fed to line 8 that operates block 3.

By operating according to the generic functional scheme described in Fig. 1, valid for all the applicative backgrounds described hereafter, this invention provides a method, and a system for implementing the same, of cutting out or of transforming an image from a source signal with a certain resolution and producing another one having a lower resolution.

The image portion cut out (cut-out signal) from the source signal can be in any space position internal to the source signal itself and of any format (as long as it is contained in its dimension); moreover, it may change its position in the frame time unit. The image portion cut out from the source signal may have the same dimension as the signal to be obtained (cut-out signal equal to the signal to be produced) or different dimension. In the latter case, digital filterings (decimations, interpolations between both frames and pixels) must be applied to the cut-out signal to obtain the dimensions specified by the signal to be produced. These techniques are well known to those skilled in the art.

The number of frames per second with which the cut-out signal is defined can be different from the one which the source signal or the one to be produced is defined with.

As a first example consider the circumstance when the cut-out signal coincides with the signal to be produced and it is obtained by cutting out a portion from the signal source having dimension equal to the format specifying it.

The frame or half frame frequency and anyway the position of extraction, if necessary, is allowed to change continuously with time.

A digital television signal, with aspect ratio 4/3, can be obtained from a digital television signal with the same number of lines but with aspect ratio equal to or greater than 16/9.

A digital television signal of conventional resolution, with aspect ratio of4/3 or 16/9, may be obtained from a high or very high definition signal.

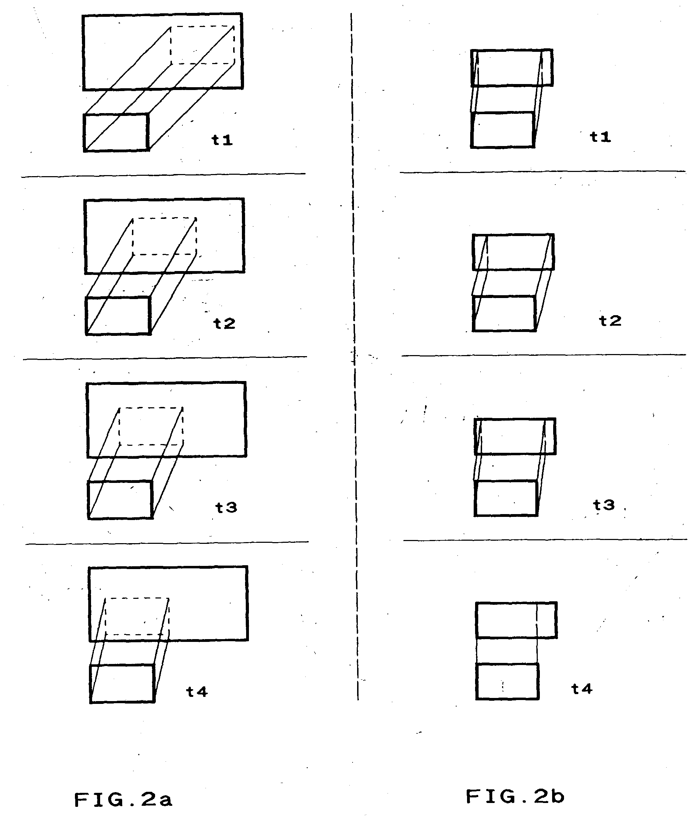

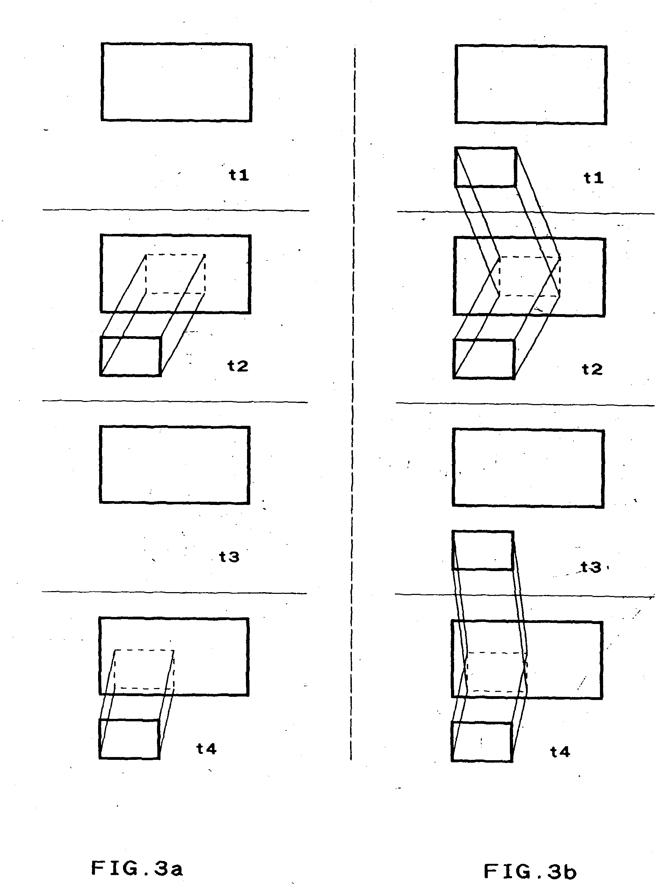

A high resolution digital television signal can be obtained from a high resolution signal with a higher aspect ratio or from a very high resolution signal, for instance the digital film formats. Examples can be seen in Figs. 2 and 3, where four successive images or frames (t1, t2, t3, t4) are represented. In fact, from Figs. 2a and 2b it is apparent that the image is obtained from a higher resolution image by varying the position of extraction with time. Moreover, from Figs. 3a and 3b, it can be seen that the image is obtained with alternate frames only.

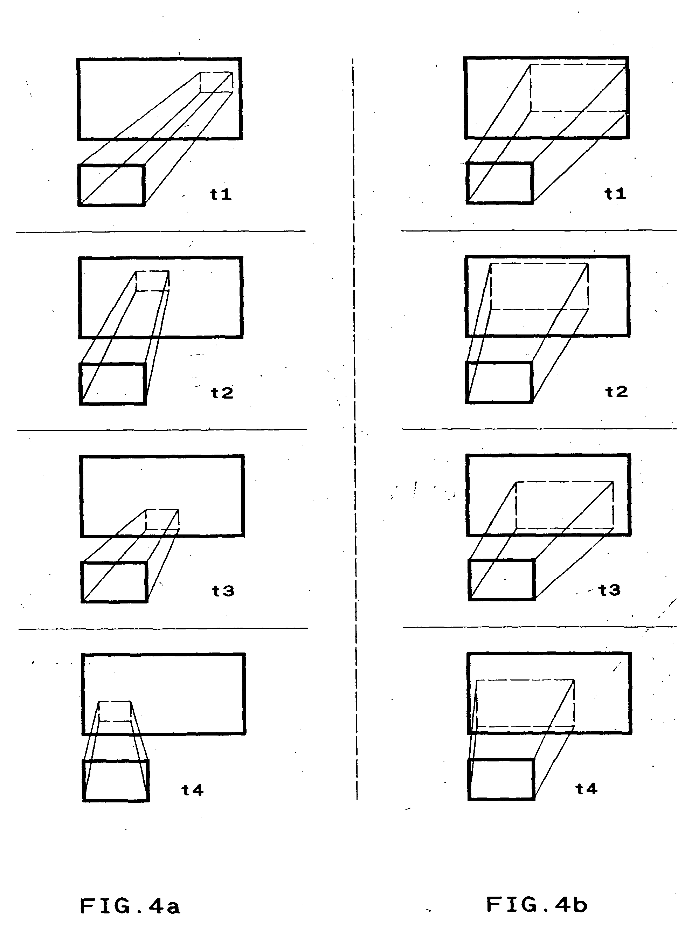

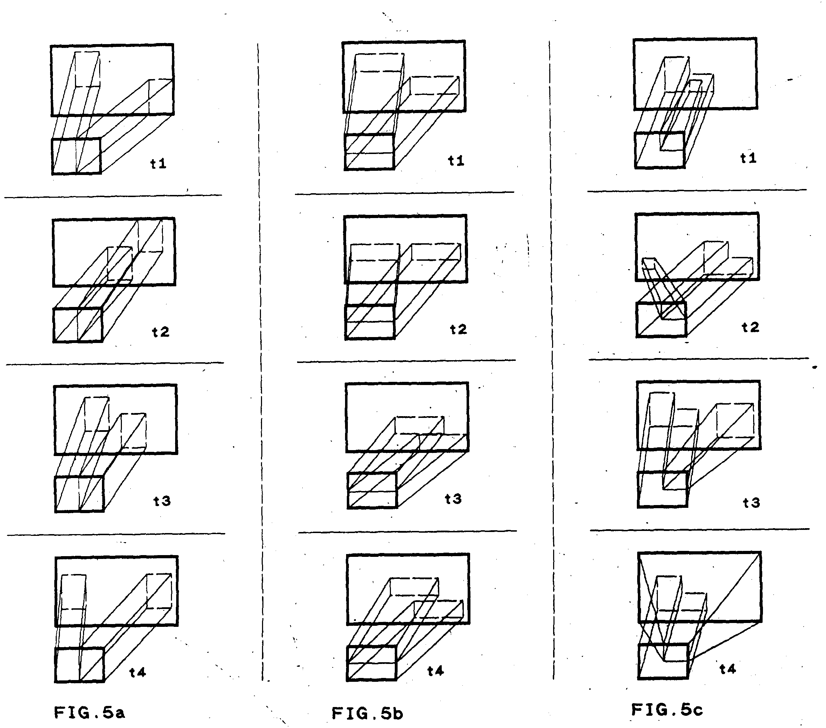

Consider also the case where the signal to be produced, in the format that specifies it, is obtained by cutting out one or more portions of any dimension from the source signal and applying space-time filterings (interpolations or decimations). The frame or half frame frequency and the position of extraction, if necessary, are allowed to change continuously with time. Examples can be seen in Figs. 4 and 5, where four successive images or frames (t1, t2, t3, t4) are still represented.

The cut-out signal is composed of only one part having dimension different from the one of the signal to be obtained so as to allow reduction (Fig. 4a) or enlargement (Fig. 4b) effects.

The cut-out signal is composed of several parts of any dimension so as to allow the combination of information, coming from different points of the source signal (Fig. 5a, 5b, 5c), on the obtained signal.

For a detailed description of the cut-out methods and of the eventual filtering, represent the digitized television signals, corresponding to different standards, through the following parameters:
p = number of active pixels/line; (p_G, p_B, p_R) or (p_Y, p_Cb, p_Cr) = number of active pixels/line in which the corresponding color components are specified, where G=green, R=red, B=blue, Y=pseudo-luminance, Cb=pseudo-chrominance type b, Cr=pseudo-chrominance type r;
l= number of active lines per frame;
q= number of frames per second. Let the total number of active pixels per frame be given by
p_G·l; (p_Y·l) and the total number of active samples per frame be given by
p_G·l + p_B·l + p_R·l; (p_Y·l + p_Cb·l + p_Cr·l) Let each sample be described by a number of bits.

Let N be the number of TV standards which the same program is wished to be transmitted with.

Despite the fact that N is able to assume any value, suppose that, for simplicity, N=2, i.e, suppose the following are given: a source television signal {S} in digital format with which to produce a source television signal {P} through cut-out television signal {C} in digital format.

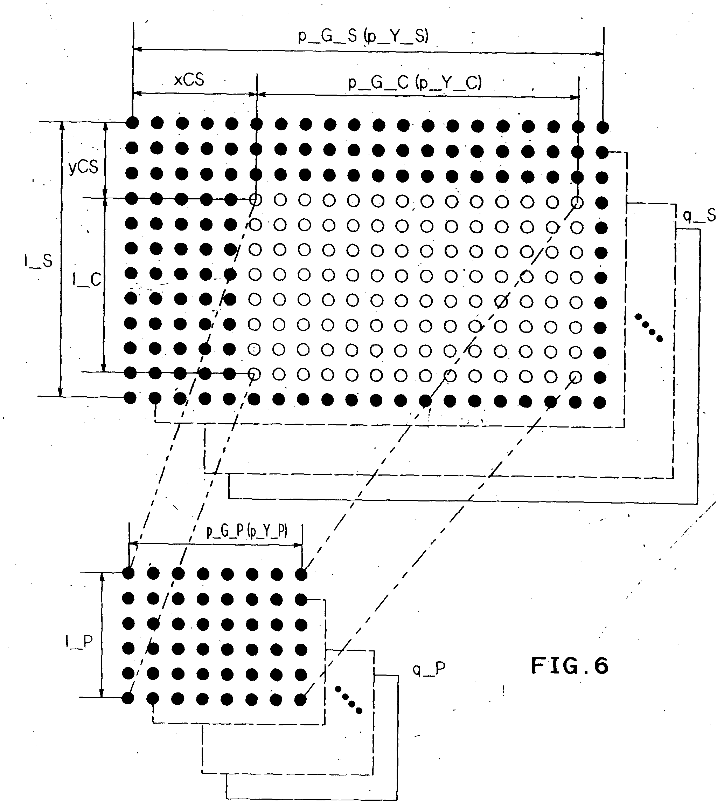

With reference to Fig. 6 and to the above definitions, let the source signal {S} be represented as follows, where the extension S highlights that the active pixels/line of the components G-,B-, R-coloured, as well as the lines per frame l and the frames per second are relative to the source image S. The same is said for the extension P applied to the components G, B, R, l, or q of the produced image P; and for the extension C applied to the components G, B, R, l or q of the cut-out image C:
(S): {p_G_S, p_B_S, p_R_S, l_S, q_S} Let the signal {P} to be produced be represented as follows:
{P}: {p_G_P, p_B_P, p_R_P, l_P, q_P} Let the cut-out signal {C} be represented as follows:
{C}: {p_G_C, p_B_P, p_R_P, l_C, q_C) Suppose the following inequalities are valid simultaneously:
p_S > = p_C
l_S> = l_C
q_S> = q_C Let the above inequalities be generally valid, when considered at frame frequency, for any type of format and scanning (progressive or interconnected) of the source signal {S} and for any type of format and scanning of the cut-out signal {C}.

In the space-time domain, the cut-out digital signal {C} will then result to be contained in the source digital signal {S}:
{C} ⊂ {S} Without going into the decimation and interpolation problems already known in the art, signal {P} can be produced by applying space-time filterings on signal {C} cut-out from {S}, suitably supported by the following operations Mpg, Npg, Mpb, Npb, Mpr, Npr, Ml, Nl, Mq, Nq, having whole values, which represent the decimation or undersampling factors (M≤N) and the oversampling or interpolation factors (M≥N):
p_G_P=p_G_C·(Mpg/Npg); (p_Y_P=p_Y_C·(Mpg/Npg))
p_B_P=p_B_C·(Mpb/Npb); (p_Cb_P=p_Cb_C·(Mpg/Npg))
p_R_P=p_R_C·(Mpr/Npr); (p_Cr_P=p_Cr_C·(Mpg/Npg))
l_P=l_C·(Ml/Ml);
q_P=q_C·(Mq/Nq); The space coordinates, measured in number of pixels/line and number of lines/frame respectively starting from the first pixel of the first line of {C} with reference to the first pixel of the first line of {S}, of the signal {C} cut-out inside {S}, from which signal {P} is obtained through eventual successive filterings, can be changed.

The scale of the time coordinate of {C} with reference to {S}, i.e. the number of frames (half frames) per second through which {C} is represented with reference to {S}, can be changed.

The cut-out of {C} can be simple:
{C}: {p_G_C, p_B_P, p_R_P, l_C, g_C} or by combining
{C}: {G₁ U Cₖ U Cₖ₊₁ U Cₙ} k being integer, progressive and less than n.
n<= p_G_C·L_C
with {C₁}:{p_G_C₁, p_B_C₁, p_R_C₁,l_C₁, q_C₁}
{Cₖ}:{p_G_Cₖ,p_B_Cₖ, p_R_Cₖ, l_Cₖ, q_Cₖ}
{Cₖ₊₁}:{p_G_Cₖ₊₁, P_B_Cₖ₊₁, P_R_Cₖ₊₁, l_Cₖ₊₁, q_Cₖ₊₁}
{Cₙ}: {p_G_Cₙ, p_B_Cₙ, p_R_Cₙ, l_Cₙ, q_Cₙ} The number of samples taken can differ among the primary color components. Any combination thereof is possible.

In the case where:
Mpg = Npg
Mpb = Npb
Mpr = Npr
Ml = Nl
Mq = Nq the following special case applies:
{P} ≡ {C} ⊂ {S} i.e. the signal {P} to be produced is directly obtained as a cut-out {C} of the source signal {S}.

Let {S} be the source digital signal from which the digital signal {P} is obtained through direct cut out or from which the digital signal {C} is obtained by direct cut out and then the digital signal {P} is subsequently obtained by means of digital filterings, composed of a digital flow of samples representing the color components of the pixels that form the standard in question, and of line and/or frame synchronism identifiers.

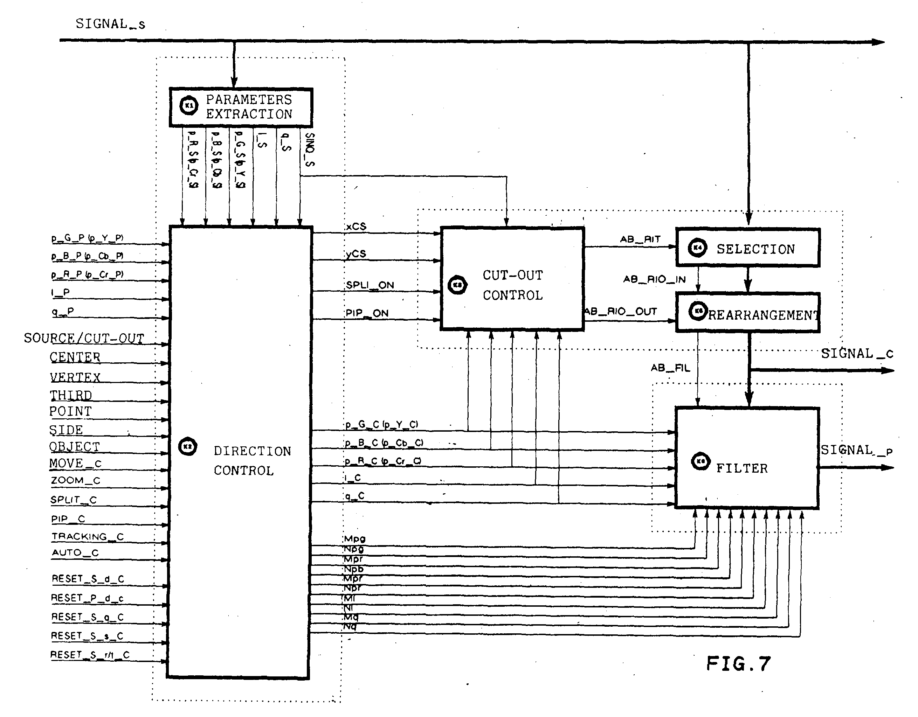

Suppose that every sample is described by a number of bits and the order of the samples in the digital flow is known beforehand. With reference to Fig. 7 let the system be described by the following blocks K1, K2, K3, K4, K5 and K6.
- Block K1:: Parameter extraction;
- Block K2:: Direction (manual, mixed or automatic) ;
- Block K3:: Transformation or cut-out control;
- Block K4:: Selection;
- Block K5:: Rearrangement;
- Block K6:: Filter;

The source signal enters block K1 with a digital sequence, known in advance as to its structure, of luminance and chrominance samples comprehensive of samples identifying the line and frame synchronisms.

Coming out from block 1 are parameters characterizing the frame dimension and the number of frames per second of the source signal (p_G_S, p_B_S, p R S, l_S, q_S). Regenerated by block K is also the frame synchronism SINQ_S that is used for driving the direction (block K2) and transformation control (block K3) operations. Block K2 collects the set of operations that can be carried out, through the system, in order to obtain the cut-out of an image portion from a source signal.

Block K2 collects the set of operations that can be carried out, through the system, in order to obtain the cut-out of an image portion from a source signal.

The parameters specifying the characteristics of the source signal:
{S} = (p_G_S, p_B_S, p_R_S, l_S, q_S} derived from block K1 are fed to the input of block K2 along with the frame synchronism SINQ-S associated therewith.

Fed at the input of K2 are the parameters specifying the characteristics of the signal to be obtained:
{P}: {p_G_P, p_B_P, p_R_P, l_P, q_P} Fed at the input of K2 are also one or more control parameters, described hereafter, which can be used as references supporting the direction management operations.

The management of the cut-out and of such parameters can be carried out by monitoring the source signal with cursors for handling the co-ordinates being overlapped, which can be driven by means of joysticks, light pens, mouses, keyboards, voice commands and eventual control icons relative to the parameters.

Consider one or more of the following reference parameters as usable:
SOURCE/CUT-OUT: it specifies whether the references specified hereafter shall be applied to the source signal or to the cut-out image;
CENTER: the center of the image cut out in the preceding frame is assumed as space reference in the subsequent cut-out operations; VERTEX: one of the four vertices of the image cut out in the preceding frame is assumed as space reference in the subsequent cut-out operations;
THIRD: one of the four points resulting from a division by thirds in horizontal and in vertical of the image cut out in the preceding frame is assumed as space reference in the subsequent cut-out operations;
POINT: any point of the image cut out in the preceding frame is specified and assumed as space reference in the subsequent cut-out operations;
SIDE: one of the four sides of the image cut out in the preceding frame is assumed as space reference in the subsequent cut-out operations;
OBJECT: an object contained in the image cut out in the preceding frame is assumed as reference in the subsequent cut-out operations. Three operation modes for the manual, automatic and mixed (automatic and manual) handling of the direction are foreseen and will now be described.

For manual handling the variation:
- of the space position of the image to be cut out with reference to the source image;
- of the dimension of the image to be cut out;
- of the number of frames per second of the signal to be cut out with reference to the source signal is allowed.

When handling the space position of the image to be cut out with reference to the source image, the following specific control is identified:
MOVE_C: the image to be cut out in the next frame will be spacially located inside the source signal in the position where the first pixel of the first line of the signal to be cut out with reference to the same one of the source signal is controlled frame by frame by means of suitable devices such as cursors, mouses, joysticks, light pens and the like.
   The parameters described previously can be used as a support for this control: they will address in advance the image to be cut out in the references of the specified source signal {S}.
   When handling the dimension of the signal cut out from the source signal, the following specific controls are identified:
ZOOM_C: the image to be cut out in the next frame will be greater or smaller than the one cut out in the preceding frame according to a number of pixels per line and number of lines per frame depending on the intensity of zoom operation, anyway controllable. The parameters described previously can be used as a support for this control: they will form the references of the image cut out previously to be maintained in the next ZOOM operation. RESET_P_d_C: the image to be cut out in the next frame will be equal to the dimension of the signal {P} to be obtained which is known in advance.
   The parameters described previously can be used as support for this control: they will form the references of the source signal or of the image cut out previously to be taken into account in the next RESET operation.
RESET_S_d_C: the image to be cut out in the next frame will be equal to the entire space dimension of the source signal {S} which is known in advance.
SPLIT_C: the image to be cut out in the next frame will be formed by the composition of several portions of the source signal. The command, with the help of the parameters described previously, determines at first the splitting into parts of images cut out previously after which each of these parts can be processed separately for the position and the dimension.
PIP_C: the image to be cut out in the next frame will be formed by the overlapping of several portions of the source signal. The command, with the help of the parameters described previously, allows the definition of position and distance of a new signal to be cut out and overalapped to the one cut out previously (use of SOURCE/CUT-OUT parameter).

Both in the cases of SPLIT-C and PIP-C the control of the cut-out (block K3) will be interested by a sole new coordinate and/or dimension at a time while the other one is held steady: those specifying the characteristics of one of the parts which have been split (SPLIT-ON active) or those specifying the characteristics of the part to be overlapped (PIP_ON active).

When handling the number of frames per second of the cut-out signal with reference to the source signal, the following specific controls are identified:
RESET_S_q_C: the image to be cut out is temporally defined through a number q_C of frames per second equal to that of the source signal {S};
ENABLE_S_s_C: the modification of the parameters defining the space cut-out operations on the source signal {S}, a frame of {S} every s times, is enabled;
DIVIDED_S_r/t_C: the image to be cut out is temporally defined by a number q_C of frames per second equal to those defining the source signal {S} multiplied by r/t (r and t integers). For the mixed manual/automatic handling the following commands are used.
TRACKING_C: following a manual handling of the cut-out, as specified previously, the content of the part cut out previously is locked and in the successive cut-outs, such content will be automatically tracked, thus allowing an automatic choice of the cut-out image position without altering its dimensions with reference to those of the frame in which the automatism is enabled. The parameters described previously can be used as a support for this control: they will allow the successive images to be cut out automatically thus favouring the content of the areas around the reference points inside the image cut out previously.

The following commands are used for the automatic handling: AUTO_C: following the setting up of the dimensions of the image to be cut out, the contents of the source signal are tracked automatically.

The parameters described previously can be used as a support for this control: they will allow the successive images to be cut out automatically thus favouring the content of the areas around the reference points inside the source signal.

For any position of this cut-out image in the source signal, obtained with the help of the reference parameters and/or of the control signals, the position of the first pixel of the first line of the image to be cut out with respect to the first pixel of the first line of the source signal in the form of two-dimensional co-ordinates (xCS, yCS), is anyway obtained and produced towards the output of block K2.

With respect to the image cut out previously, the system hinders the new position/dimension combinations violating the dimensions of {S} by keeping the parameters of the last cut-out image. In function of the input parameters specified above, block K2 outputs the following information:
- p_G_C (p_Y_C), p_B_C (p_Cb_C), p_R_C (p_Cᵣ_C): number of active pixels per line of the cut-out signal specified through the colour components;
- l_C : number of active lines per frame of the cut-out signal;
- q_C : number of frames per second of the cut-out signal;
- xCS : distance measured in number of pixels per line between the pixels of the first line of (C) and the first pixel of the first line of {S};
- yCS : distance measured in number of lines between the first pixel of the first line of (C) and the first pixel of the first line of {S};
- Mpg, Npg, Mpb, Npb, Mpr, Npr: parameters establishing the whole ratio between the number of pixels of {P} and of {C}, separate for each colour component;
- Ml, Nl: parameters establishing the whole ratio between the number of lines of (P) and of {C};
- Mq, Nq: parameter establishing the whole ratio between the number of frames of {P} and of {C}.

Block K3 receives at its input the frame synchronism SINQ-S extracted from the source signal by block K1.

Block K3 receives from block K2 the parameters specifying the position of the first pixels of the first line of the signal to be cut out with respect to the first pixel of the first line of the source signal (xCS, yCS).

Block K3 also receives from block K2 the parameters characterizinq the number of frames per second Q_C and the dimension of the signal to be cut out, as number of pixels per line (p_G_C (p_Y_C), p_B_C (p_Cb_C), p_R_C (p_Cr_C)) and as number of lines per frame l_C. Two additional input signals inform if the cut-out is to be considered as simple or composite. In case of composite signal there will be active hence: SPLIT_ON when the image to be cut out will be formed by the composition of several portions of the source signal and PIP_ON when the image to be cut out will be formed by the overalapping of several positions of the source signal and which correspond to the enabling of the relative parameters SPLIT-C and PIP_C.

Both when SPLIT_ON is active and when PIP-ON is active a sole new dimension will reach block K3 from block K2. In fact, it is assumed that activating SPLIT_ON is equivalent to storing the dimension and the position preceding the activation and that the dimension of one of the separate parts and the one preceding the SPLIT (stored) are enough to obtain in block 3 also the dimension relative to the second part following the SPLIT. The same applies to PIP_ON which allows the storing of the dimension and the position preceding PIP_ON and the overlapping, to the stored part, of a second image of other dimension and with capture position variable inside the source signal and representation composition variable with respect to the abovementioned signal.

Block K3 outputs signal AB_RIT specifying to block K4 how to distinguish the samples to be cut out among all those going by. The source video signal entered into block K4, formed by a sequence of luminance and chrominance samples known in advance by synchronism identifiers and by the blanking, is cut out, i.e. the desired samples forming part of the area to be cut out are selected in function of AB_RIT generated by block K3. The selected samples are then produced towards the output of block K3 with an associated signal AB_RIO_IN which identifies the validity thereof sample by sample and which serves as an enable for block K5.

The video signal selected by the source signal is fed to the input of block K5 with a signal associated therewith which identifies the validity of each single sample. The rearrangement is necessary to eliminate the pauses that have been introduced during the selection.

The information is written into a memory whenever the enabling signal AB_RIO_IN coming from block K4 is active.

The information is read out from the memory in a compact manner when the command AB-RIO-OUT coming from K3 is active. The information is output with a signal AB-FIL associated therewith that attests the validity of what is going by. This signal can be used as a filtering enable for the block K6.

The output information {C} will correspond to the signal {P} to be produced when:
Mpg = Npg
Mpb = Npb
Mpr = Npr
Ml = Nl
Mq = Nq

The cut-out signal can have frame dimensional characteristics and a number of frames per second different from those of the signal to be obtained. Therefore, it is necessary that it is filtered (interpolated or decimated).

The cut-out signal comes into block K6 associated with a signal AB-FIL identifying the validity of the going by samples.

The parameters characterizing the cut-out signal as to the dimension in the frame (p_G_C (p_Y_C), p_B_C (p_Cb_C), p_R_C, p_Cr_C), l_C) and the number of frames per second (q_C) are entered into block K6.

Also the parameters (Mpg, Npg, Mpb, Npb, Mpr, Npr, Ml, Nl, Mq, Nq) that block K1 has determined on the basis of the characteristics of the cut-out signal and of those of the signal to be produced are entered into block K6. These parameters allow the suitable deriving of the interpolation or decimation operations.

Block K6 outputs a signal with the dimensional characteristics and the number of frames per second specified at the input of block K2. The produced signal is comprehensive of synchronism and blanking identifiers.

In view of the circuit simplicity of this arrangement, it will not be described in detail since a person skilled in the art will realize it without any difficulty given the teachings herein. While the invention has been described with reference to a specific embodiment thereof, it should be noted that the invention should not be construed as limited in the illustrated embodiment, being susceptible to several variations which will be apparent to those skilled in the art and should be understood as falling within the scope of the accompanying claims.

## Claims

1. Method of transforming a first image having a first space/time dimension into a second image having a second space/time dimension, characterized by applying suitable operators to said first image so as to extract at least one image portion from said first image, having space-time dimension equal to said second dimension.

2. Method according to claim 1, characterized in that, in order to obtain said second image, a space-time filtering is further carried out on said at least one image position.

3. Method according to claim 1 characterized in that said second image has space-time dimension smaller than the first one.

4. Method according to claim 1, characterized in that said first and second images form part of sequences of television images.

5. Method according to claim 2, characterized in that said space-time filtering corresponds to a decimation of said at least one image position.

6. Method according to claim 2, characterized in that said space-time filtering corresponds to an interpolation of said at least one image position.

7. Method according to claim 1, characterized in that said at least one image portion has a variable space-time dimension.

8. Method according to claim 4, characterized in that said at least one image portion is extracted at different times.

9. Circuit arrangement adapted to transform a first image having first characteristic parameters into a second image having second characteristic parameters, characterized in that it comprises.
- means for extracting said first characteristic parameters of said first image,
- direction means receiving said first and second parameters and a plurality of commands,
- transformation control means receiving information from said direction means,
- selection means receiving information from said transformation control means, and
- rearrangement means receiving information from said transformation control and selection means and providing said second image.

10. Circuit arrangement according to claim 9 characterized in that said second image is further processed by processing means.

11. Circuit arrangement according to claim 10 characterized in that said processing means carry out a decimation of said second image.

12. Circuit arrangement according to claim 10 characterized in that said processing means carry out an interpolation of said second image.

13. Circuit arrangement according to claim 9 characterized in that said first and second images form part of television image sequences.

14. Circuit arrangement according to claim 9 characterized in that said second image has a space-time dimension smaller than the first image.

15. Circuit arrangement according to claim 9 characterized in that said plurality of commands provide said direction means with all information necessary for the desired transformation.
